# EUROPÄISCHE PATENTSCHRIFT

(11) **EP 2 687 446 B1**
(45) Veröffentlichungstag und Bekanntmachung des Hinweises auf die Patenterteilung: **20.05.2015**
(21) Anmeldenummer: 13188518.8
(22) Anmeldetag: 13.04.2010
(51) Int. Cl.: B65D 85/804, A47J 31/24, B65B 29/02, B65B 51/22

(54) **Verfahren zum Herstellen einer Kapsel für ein Extraktionsgut**
Method for manufacturing a capsule for an extraction product
Procédé pour la fabrication d' une capsule pour un produit d' extraction

(30) Priorität: 15.04.2009 EP 09405065
(43) Veröffentlichungstag der Anmeldung: 22.01.2014
(62) Teilanmeldung aus: 10713297.9
(73) Patentinhaber: Luna Technology Systems LTS GmbH, 8304 Wallisellen (CH)
(72) Erfinder: Deuber, Louis, 8805 Richterswill (CH)
(74) Vertreter: Frei Patent Attorneys

(56) Entgegenhaltungen:
- EP-A1- 1 510 459
- EP-A1- 1 997 748
- WO-A1-2008/041262
- DE-A1-102005 020 718
- FR-A1- 2 908 970
- US-A- 3 698 624
- US-A- 3 787 257

## Beschreibung

Die Erfindung betrifft die Zubereitung von Getränken oder dergleichen aus einem in einer Kapsel enthaltenen Extraktionsgut, beispielsweise gemahlenem Kaffee. Sie betrifft insbesondere ein Verfahren zur Herstellung einer Portionenkapsel für ein Extraktionsgut.

Extraktionsgeräte zum Zubereiten von Getränken oder dergleichen aus einem in einer Portionsverpackung vorhandenen Extraktionsgut sind beispielsweise als Kaffee- oder Espressomaschinen bekannt und erfreuen sich nach wie vor steigender Beliebtheit. In vielen entsprechenden Systemen sind die Portionsverpackungen als Kapseln ausgebildet, in denen das Extraktionsgut bspw. luftdicht abgeschlossen ist. Für die Extraktion wird die Kapsel an zwei einander gegenüberliegenden Seiten angestochen. Auf der ersten Seite wird eine Extraktionsflüssigkeit - im Allgemeinen heisses Wasser - eingeleitet. Auf der zweiten Seite wird das Extraktionsprodukt aus der Kapsel ausgeleitet. Je nach zuzubereitendem Getränk und System kann dabei im Innern der Kapsel ein erheblicher Druck von beispielsweise 5-20 bar herrschen.

Solche Kapseln sind nicht zu verwechseln mit - und gänzlich anderen Anforderungen ausgesetzt als - Portionenverpackungen von Filterkaffee, die durch Abziehen einer Folie, Abnehmen eines Deckels oder dergleichen geöffnet werden und zu keinem Zeitpunkt einem erhöhten Druck ausgesetzt sind. Ebenso wenig sind sie vergleichbar mit den äusseren, aromadichten Verpackungen von "Filterpads". Kapseln der hier beschriebenen Art werden in Brühmodulen von Kaffeemaschinen oft horizontal oder auch vertikal von der heissen Brühflüssigkeit durchquert und sind dabei wie erwähnt einem erheblichen Druck im Innern ausgesetzt. Dabei stellt sich auch das Problem des Abdichtens, darf doch die unter Druck stehende Brühflüssigkeit nicht an der Kapsel vorbei direkt in die Ausleitvorrichtung gelangen.

Als Kapselmaterialien sind insbesondere Aluminium und Kunststoffe, bspw. Polypropylen bekannt geworden. Aluminiumkapseln bringen eine sehr gute Haltbarkeit des Extraktionsguts, sind aber in der Herstellung sehr energieaufwändig. Polypropylenkapseln sind betreffend Energieaufwand und Entsorgung vorteilhaft, stellen aber erhöhte Anforderungen an den Anstechmechanismus.

Besonders vorteilhaft in Bezug auf den Materialaufwand sind tiefgezogene Kapseln, die jedoch immer eine markant konische Form aufweisen.

Auf dem Markt sind sowohl Kapseln mit integrierten Filtermitteln erhältlich als auch Kapseln die lediglich eine das Extraktionsgut umschliessende Hülle aufweisen, und für die also der Anstechmechanismus so ausgebildet sein muss, dass nicht in unerwünschter Weise Extraktionsgut zusammen mit dem Extraktionsprodukt aus der Kapsel abgeführt werden kann.

Ein Beispiel für eine Kapsel ohne integrierte Filtermittel wird bspw. in EP 1 886 942 offengelegt.

Erhältliche Kapseln sind im Allgemeinen rotationssymmetrisch und weisen einen umlaufenden Kragen auf, der eine für die Funktionsfähigkeit wesentliche Dreifachfunktion hat:
- der Kragen dient dem Verschliessen der Kapsel beim Abfüllvorgang, indem er in genügendem Abstand zum Kapselinnenraum einen Energierichtungsgeber für eine Ultraschallschweissung oder eine genügend grosse Fläche für ein thermisches Verschweissen aufweist;
- der Kragen dient dem Halten der Kapsel vor dem Brühvorgang;
- der Kragen ist wesentlich für das Abdichten während des Brühvorgangs, stellt er doch sicher, dass keine Brühflüssigkeit an der Kapsel vorbei direkt in die Ausleitvorrichtung gelangt.

Eine zusätzliche Dichtungsfunktion bei Kapseln gemäss dem Stand der Technik kann die konische Form übernehmen, die sehr genau in eine entsprechende Aufnahme der Brühkammer passt.

Viele der erhältlichen Kapseln sind becherförmig ausgeformt, d.h. sie sind um eine Achse rotationssymmetrisch und konisch. Oft hat der Deckel der becherförmigen Kapsel eine andere Materialzusammensetzung als der eigentliche Becher, der die Mantel- und Bodenfläche bildet. Dabei erfolgen die Injektion der Extraktionsflüssigkeit durch den Deckel oder die Bodenfläche und das Ausleiten des Extraktionsprodukts entsprechend durch die Bodenfläche bzw. den Deckel. Diese Kapselform hat sich bewährt, sowohl im Hinblick auf die mechanische Stabilität als auch im Hinblick auf herstellungstechnische Aspekte.

WO 2008/041262 ist eine würfelförmige Portionenkapsel mit einer Einlass- und Auslassöffnung, die je durch einen wasserlöslichen Deckel bedeckt sind. Die würfelförmige Kapsel wird aus einem fünfseitigen, an einer sechsten Seite offenen Polyeder-Grundkörper und einem entlang eines umlaufenden Rands der offenen sechsten Seite befestigten Deckel hergestellt.

FR 2 908 970 offenbart kugelförmige Portionenkapseln, deren Halbkugelschalen durch Ultraschallschweißen verbunden sind.

Eine besondere Problematik ist mit der Verwirbelung des Extraktionsguts während des Brühprozesses verbunden. Während des Extraktionsprozesses fliesst Flüssigkeit mit grosser Geschwindigkeit durch die Kapsel. Bei einer beschränkten Verdichtung des Extraktionsgutes wird dieses während des Brühprozesses stark verwirbelt. Aus diesem Grund ist bereits vorgeschlagen worden (EP 1 886 942), das Extraktionsgut während des Kapselfüllprozesses stark zu komprimieren. Dieses Verfahren ist jedoch recht aufwändig, und beim Transport der Kapsel kann die durch die Kompression erreichte tablettenartige Konsistenz des Extraktionsguts verloren gehen.

Eine weitere, oft diskutierte Problematik im Zusammenhang mit Portionskapseln für Brühgetränke ist die aufwändige Verpackung, welche die Energiebilanz verschlechtert.

Es ist eine Aufgabe der Erfindung, ein Verfahren zum Herstellen einer Kapsel für ein Brühgetränk oder dergleichen zur Verfügung zu stellen, welches Nachteile des Standes der Technik überwindet.

Diese Aufgabe wird gelöst durch die Erfindung, wie sie in den Patentansprüchen definiert ist.

Die erfindungsgemäss hergestellte Portionenkapsel ist vom eingangs erwähnten Typus, bei welchem das Extraktionsgut bspw. luftdicht abgeschlossen ist und die ein Anstechen der Kapsel an zwei einander gegenüberliegenden Seiten für die Extraktion vorsieht. Auf der ersten Seite wird eine Extraktionsflüssigkeit - im Allgemeinen heisses Wasser - eingeleitet. Auf der zweiten Seite wird das Extraktionsprodukt aus der Kapsel ausgeleitet. Je nach zuzubereitendem Getränk und System muss dabei die Kapsel einem erheblichen Druck in ihrem Innern von beispielsweise 5-20 bar, insbesondere mehr als 10 bar standhalten können. Das schliesst die Verwendung der Kapsel in Brühprozessen mit einem niedrigeren Druck von bspw. nur 1-2 bar - insbesondere für Filterkaffee nach amerikanischer Art - jedoch nicht aus.

Die Kapsel hat die Form eines Würfels oder Quaders und ist frei von abstehenden Kragen oder dergleichen.

Unter quader- bzw. würfelförmig versteht man hier eine Form, die von der geometrisch exakten Quader- bzw. Würfelform nicht so weit abweichen, dass sie funktionell sehr verschieden wären; bspw. ist die Form eines Pyramidenstumpfs mit rechteckiger bzw. quadratischer Grundfläche, wobei die an die Grundfläche angrenzenden Seitenflächen gegenüber der Senkrechten zur Grundfläche um nur einen kleinen Neigungswinkel α von bspw. höchstens 3° oder 2°, vorzugsweise höchstens ca. 1° geneigt sind, mit eingeschlossen. Die Quader- bzw. Würfelform schliesst wie erwähnt einen umlaufenden, vom Kapselkörper auf der Ebene einer Endfläche abstehenden Kragen aus, der zum Halten der Kapsel in Führungsschlitzen vorgesehen ist. Die Quader- bzw. würfelförmige Kapsel kann trotzdem herstellungstechnisch bedingte umlaufende Ränder (bspw. eine Schweissbraue) aufweisen kann, die bspw. maximal 1.5 mm oder 1 mm, 0.8 mm, 0.6 mm, besonders bevorzugt 0.5 mm oder weniger seitlich hervorstehen, die durch ihre beschränkten Abmessungen die Funktion der Würfel- oder Quaderform nicht wesentlich beeinträchtigen und die ausserdem bspw. von einer Endflächen-Ebene abgesetzt sind.

Diese Form hat erstens den grossen Vorteil, dass das Extraktionsgut von verschiedenen Seiten her komprimierbar ist, was bei den becherförmigen Kapseln nicht der Fall ist. Insbesondere kann das Extraktionsgut auch im bereits in der Kapsel verpackten Zustand noch komprimiert werden - durch Drücken zweier einander gegenüberliegender Seitenwände gegeneinander. Bei becherförmigen Kapseln ist das nicht ohne Weiteres zerstörungsfrei möglich. Bevorzugt ist die Kapsel so ausgebildet, dass eine Deformierung von zwei gegenüberliegenden Seitenwänden (bzw. von zentralen Punkten an diesen Seitenwänden) entgegen einer elastischen Kraft volumenverringernd möglich ist. Dies bezieht sich auf den Raumtemperatur-Zustand bezogen und schliesst eine bleibende Verformung einer Kunststoff-Kapselwandung im heissen Zustand nicht aus.

Zweitens ergibt sich der Vorteil der markant verbesserten Packbarkeit. Die gefüllten und versiegelten Kapseln können so aneinandergereiht und aufeinander gestapelt werden, dass sich ein im Wesentlichen von Zwischenräumen freier Stapel ergibt, der auch - bspw. als Würfel - ansehnlich präsentiert werden kann und trotzdem mit einer minimalen äusseren Verpackung auskommt.

Bevorzugt ist die Kapsel von jeder Seite - bzw. jedem Paar von einander gegenüberliegenden Seiten her anstechbar. Das bedeutet hier, dass die Kapselwandung an der betreffenden Würfelseite nicht nur durch eine entsprechende metallische Spitze perforierbar ist, sondern auch dass die an einem Paar von gegenüberliegenden Kapselseiten her angestochene Kapsel beim Einleiten der Flüssigkeit dem Brühdruck standhält und die Brühflüssigkeit nur auf der Extraktionsseite und nur am Ort der Perforationen abfliesst.

Die Kapsel wird durch die alle Seiten, Kanten und Ecken umfassende Wandung hermetisch und Sauerstoffdicht abgeschlossen. Es ist also keine separate, die Kapsel ganz oder teilweise bedeckende Folie und kein sauerstoffdichter Beutel oder dergleichen für die Kapsel notwendig. Im Vergleich zu bekannten Systemen ist die Abfallmenge deutlich geringer.

Bevorzugt besteht die Kapsel auf allen Seiten aus im Wesentlichen derselben Materialzusammensetzung. Insbesondere kann die Kapsel auch auf allen Seiten im Wesentlichen dieselbe Dicke aufweisen. Mit anderen Worten ist keine spezielle, anders als der Grundkörper ausgestaltete Deckelfolie notwendig. "Im Wesentlichen dieselbe Dicke" kann bspw. bedeuten, dass sich die Dicken der verschiedenen Seiten um höchstens 30% unterscheiden.

Besonders vorteilhaft ist die Würfelform. Bei Ausgestaltung mit auf allen Seiten derselben Materialzusammensetzung und Dicke spielt es keine Rolle, wie die würfelförmige Kapsel in ein Brühmodul des Extraktionsgeräts (Kaffeemaschine oder dergleichen) eingelegt wird. Das verringert das Risiko von Fehlmanipulationen durch den Benutzer.

Die Kapsel besteht vorzugsweise aus Kunststoff. Ein speziell bevorzugtes Material für die Kapsel ist Polypropylen (PP). Auch andere Materialien sind denkbar, insbesondere andere lebensmittelverträgliche Kunststoffe. Die Wandstärke beträgt bei der Ausgestaltung als Kunststoffkapsel vorzugsweise zwischen 0.1 mm und 0.5 mm, bspw. zwischen 0.2 mm und 0.4 mm, insbesondere zwischen 0.25 mm und 0.35 mm.

Die Kapsel ist bei der Ausgestaltung als Kunststoffkapsel vorzugsweise durch Verformen (bspw. Tiefziehen) einer Kunststofffolie hergestellt. Das macht eine im Vergleich zu anderen Verfahren - bspw. dem Spritzgiessen - massiv reduzierte benötigte Materialmenge möglich. Die Kunststofffolie kann wie an sich bekannt eine Sauerstoffsperrschicht enthalten. Bisherige tiefgezogene Kunststoffkapseln waren immer konisch, weil konische Formen dem Tiefziehverfahren entgegenkommen. Die Erfindung (bzw. Ausführungsformen davon) beschreitet diesbezüglich einen gänzlich neuen Weg, indem eine vom Konischen abweichende Form gewählt wird, die sich wie vorstehend erwähnt als sehr vorteilhaft erweist. Zu diesem Zweck wird ein eigens für solche Anwendungen entwickeltes Tiefziehwerkzeug mit speziellen Eigenschaften verwendet.

Das Verfahren für die Herstellung der Kapsel geht wie folgt: Zunächst wird aus einem geeigneten Kunststoff ein fünfseitiger, einseitig offener Würfel-Grundkörper (oder entsprechend anderer Polyeder-Grundkörper) gefertigt. Dies kann in einer Verpackungsherstellungsfabrik und mit dem Tiefziehverfahren geschehen. Dann wird in einer Abfüllanlage der offene Grundkörper mit dem Extraktionsgut gefüllt. Anschliessend wird die fehlende Seite als Deckel am offenen Grundkörper befestigt, wobei der Deckel vorzugsweise dieselbe Materialzusammensetzung und Dicke aufweist wie der Grundkörper.

Die Befestigung erfolgt entlang des umlaufenden Randes des Grundkörpers mit Ultraschallschweissen. Zu diesem Zweck kann der Grundkörper zunächst einen entlang der offenen Seite umlaufenden, gegen innen oder aussen abstehenden Kragen aufweisen, mit dem der Deckel verschweisst oder verklebt wird. Im Falle einer Befestigung mittels Ultraschallschweissens kann der Kragen ausserdem mit einem Energierichtungsgeber versehen sein. Dabei kann im Unterschied zu bekannten Lösungen der Energierichtungsgeber nicht möglichst weit aussen, sondern in der Nähe der Innenseite angeordnet sein. Beispielsweise kann die Distanz *d* zwischen der einer Kante des Energierichtungsgebers und der von der inneren Wand der Kapsel definierten Ebene nicht mehr als 0.7 mm, bevorzugt nicht mehr als 0.6 mm, 0.5 mm oder 0.4 mm betragen und beispielsweise im Bereich zwischen 0.2 mm und 0.4 mm sein. Wenn - was bevorzugt ist -der Kragen gegen aussen absteht, kann der Deckel etwas grösser sein als die offene Seite des Grundkörpers und bspw. etwa bis zum äusseren Rand des Kragens ragen. Nach der Verschweissung kann der umlaufende Rand optional mindestens teilweise abgetrennt werden, beispielsweise durch Stanzen, damit sich höchstens geringe Abweichungen von der Form des Würfels (der entsprechenden anderen Polyeders) ergeben.

Gemäss einer zweiten Möglichkeit weist ebenfalls der Grundkörper zunächst einen umlaufenden, gegen aussen abstehenden Kragen auf. Der Deckel kann flach oder - bevorzugt - nach aussen gewölbt sein. Dann wird das Ultraschall-Trennschweissverfahren angewandt, bei welchem zwischen einer Sonotrode und einem Schneidamboss Ultraschallenergie absorbiert wird, welche einerseits eine vergleichsweise tief gehende Verschweissung bewirkt, die auch eine grosse Druckbeständigkeit aufweist, und welche andererseits den vorstehenden Kragen gleich beim Schweissvorgang abtrennt.

Ausführungsbeispiele der Erfindung werden nachfolgend anhand von Zeichnungen beschrieben. In den Zeichnungen bezeichnen gleiche Bezugszeichen gleiche oder analoge Elemente. Die Zeichnungen sind nicht massstäblich und zeigen teilweise einander entsprechende Elemente in von Figur zu Figur unterschiedlichen Grössen. Es zeigen:
- Figur 1 eine Ansicht einer Kapsel,
- Figur 2 eine Ansicht einer Variante der Kapsel von Fig. 1,
- Figur 3 eine Ansicht einer weiteren Variante der Kapsel von Fig. 1,
- Figur 4 schematisch eine annähernd würfelförmige, leicht pyramidenstumpfförmige Kapsel,
- Figur 5 ein Anstechen über eine Kapselseite,
- Figur 6 ein Anstechen über eine Kapselkante oder -ecke,
- Figur 7 einen Grundkörper mit Hilfskragen zur Herstellung einer erfindungsgemässen Kapsel,
- Figur 8 eine Detail des Grundkörpers und eines Deckels während des Verfahrens zur Herstellung der Kapsel,
- Figuren 9 und 10 einen Grundkörper und einen Deckel für ein alternatives Verfahren zur Herstellung einer erfindungsgemässen Kapsel,
- Figur 11 eine Ansicht einer nach dem Verfahren gemäss Figuren 9 und 10 hergestellten Kapsel, und
- Figuren 12- und 13Darstellungen eines Brühmoduls zum Zusammenwirken mit erfindungsgemässen Kapseln.

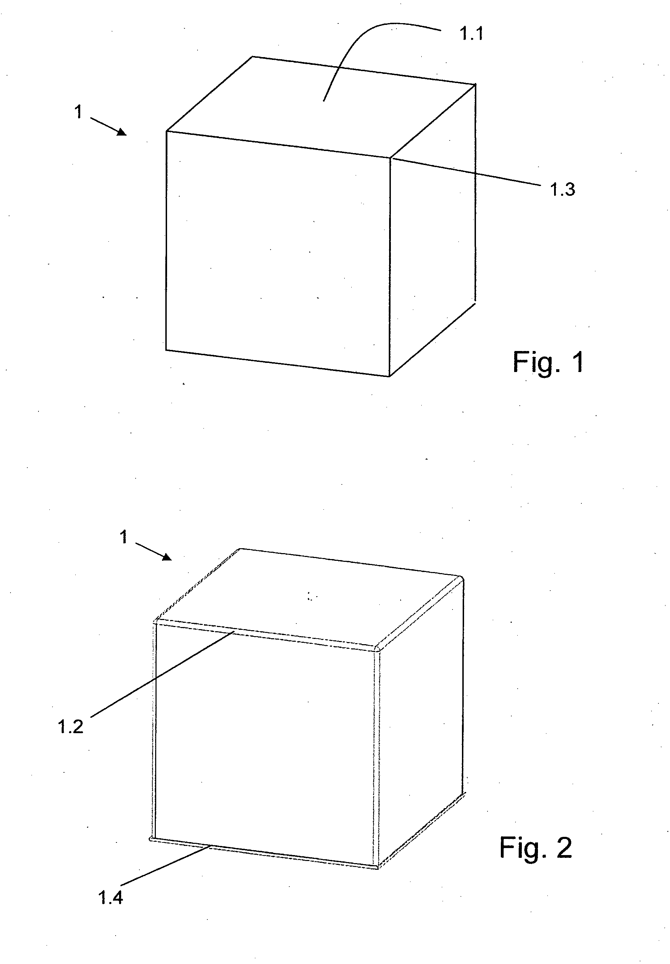

Die Kapsel 1 gemäss **Figur 1** ist würfelförmig und besteht aus Polypropylen mit einer Wandstärke von 0.1 mm und 0.5 mm, vorzugsweise zwischen 0.2 mm und 0.4 mm, bspw. zwischen 0.25 mm und 0.35 mm.

Die äussere Länge der Würfelkanten 1.2 beträgt für Einzelportionen für Kaffee für kontinentaleuropäische Trinkgewohnheiten bevorzugt zwischen 24 und 30 mm, beispielsweise zwischen 26 und 27 mm. Bei einer äusseren Kantenlänge von 27.5 mm ergibt sich ein Füllgewicht von maximal ca. 8.5 g Kaffee. Die Kapselgrösse von Einzelportions-Kapseln kann jedoch auch andere Bemessungen haben, beispielsweise für amerikanische Kaffeetrinkgewohnheiten. Dort können die Kapseln eine äussere Kantenlänge von bspw. bis zu 34 mm, insbesondere beispielsweise ca. 32 mm habe, für eine Füllmenge von ca. 14-15 g. Für solche Trinkgewohnheiten kann auch der Druck des eingeleiteten Wassers entsprechend anders gewählt sein und beispielsweise nur ca. 1-2 bar anstatt der sonst bevorzugten 10-18 bar betragen. Insgesamt ist ein bevorzugter Bereich der Kantenlängen zwischen 24 mm und 34 mm.

Die Kapsel kann für das Einleiten der Extraktionsflüssigkeit und das Ausleiten des Extraktionsprodukts von allen sechs Seiten 1.1, allen zwölf Kanten 1.2 und allen acht Ecken 1.3 her angestochen werden, wobei das Ein- und das Ausleiten bevorzugt an einander gegenüberliegenden Seiten/Kanten/Ecken erfolgt.

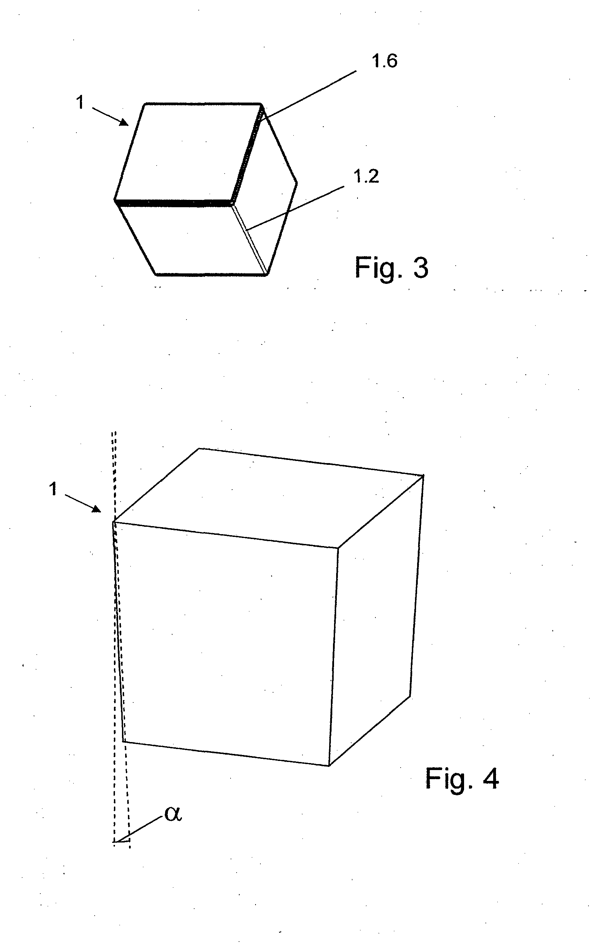

In der Darstellung gemäss **Figur 2** sieht man, dass eine würfelförmige Kapsel Kanten aufweisen kann, die als abgerundete Kanten 1.2 ausgebildet sind. Ausserdem ist ein in Fig. 2 unterseitig liegender, umlaufender, leicht seitlich herausragender Kragen 1.4 vorhanden, der herstellungsbedingt ist, was nachfolgend noch eingehender erläutert wird. Wie **Figur 3** zeigt, kann auch eine umlaufende Verstärkung 1.6 vorhanden sein, die ebenfalls herstellungstechnisch bedingt ist

Die Kapsel 1 gemäss **Figur 4** ist ebenfalls näherungsweise würfelförmig. Die in der Figur oben liegende Seite 1.1 ist jedoch etwas grösser als die Unterseite, so dass de Kapsel streng mathematisch gesehen eine Pyramidenstumpfform hat. Der Neigungswinkel α der in der Figur seitlichen Flächen gegenüber der Senkrechten zur Grundfläche - gemeint ist natürlich diejenige zur Grundfläche senkrechte Ebene, die durch die Kante zwischen der Grundfläche und der entsprechenden seitlichen Fläche verläuft - ist sehr klein, er beträgt vorzugsweise höchstens 2° zum Beispiel nur ca. 1°. Ausserdem entspricht die Höhe der Kapsel über der Grundfläche näherungsweise der Länge der Grundflächenkanten, und weicht bspw. um höchstens 5% davon ab.

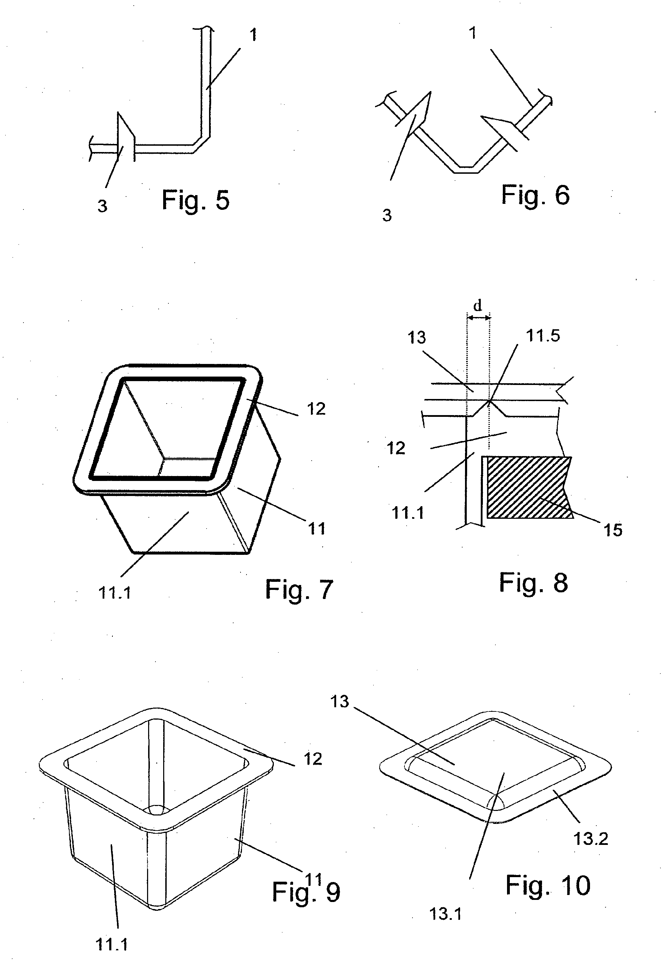

**Figur 5** zeigt sehr schematisch das Anstechen einer Seitenwand der Kapsel mit einem Perforationselement 3. Perforationselemente zum Anstechen der Kapsel zum Zweck des Ein- oder Ausleitens von Flüssigkeit sind bekannt und werden auch weiterhin entwickelt. Grundsätzlich ist die erfindungsgemässe Kapsel für jegliche Perforationsmechanismen geeignet, die zum Anstechen des gewählten Kapselmaterials mit der gewählten Wandstärke entwickelt worden sind, das heisst aufgrund der speziellen Form der erfindungsgemässen Kapsel ergeben sich keine anderen Anforderungen an den Anstechmechanismus als bei anderen Formen. Es sind jedoch Anordnungen bevorzugt, bei denen injektorseitig und insbesondere extraktionsseitig mehrere verteilte Perforationselemente vorhanden sind, und nicht nur ein mittig angebrachtes Perforationselement.

**Figur 6** zeigt eine entsprechende Anordnung zum Anstechen einer Kapsel 1 von einer Kante her. Die Anordnung weist zwei einander zugeordnete Perforationselemente in unmittelbarer Nähe zur Kante auf, die die an die Kante angrenzenden Seiten perforieren, damit eine Flüssigkeit ein- oder ausgeleitet werden kann. Weitere Paare von Perforationselementen können entlang der Länge der Kante angeordnet sein, oder den beiden an die Kante angrenzenden Seiten kann eine unterschiedliche Zahl von Perforationselementen zugeordnet sein. Auch ein Anstechen der Kapsel von der Ecke her ist denkbar, wobei dann vorzugsweise mindestens drei Perforationselemente vorhanden sind, für jede an die Ecke stossende Seite der Kapsel eines.

Die entsprechende Anordnung von Perforationselementen zum Aus- bzw. Einleiten ist vorzugsweise an der gegenüberliegenden Seite/Kante/Ecke vorhanden, wobei im Prinzip auch asymmetrische Anordnungen (Einleiten über eine Kante, Ausleiten über eine Seitenfläche oder dergleichen) denkbar wären.

Anhand von **Figuren 7 und 8** wird nachstehend noch ein Verfahren zur Herstellung einer Kapsel der vorstehend beschriebenen Art erörtert, wobei das Verfahren der erwähnten ersten Möglichkeit entspricht. **Figur 7** zeigt einen einseitig offenen würfelförmigen Körper 11 wie er beispielsweise durch Tiefziehen herstellbar ist. Die an die in der Figur oben liegende Öffnung angrenzenden Seitenwände 11.1 sind ganz leicht - um 1 ° - zur Senkrechten auf die der Öffnung gegenüberliegende Seitenwand (,Boden') geneigt, und zwar so, dass die Öffnung etwas grösser ist als die auf der Innenseite gemessene Fläche des Bodens. Durch dieses optionale Merkmal ist der würfelförmige Körper im nicht gefüllten Zustand Platz sparend stapelbar. Gemäss der Erfindung besteht auch die Möglichkeit, diese leichte Neigung wegzulassen, um eine ganz exakt würfelförmige Kapsel zu erhalten; in diesem Fall sind die nicht gefüllten, geöffneten würfelförmigen Körper nicht mehr gut stapelbar und werden bspw. mit Vorteil als Schüttgut transportiert.

Im Bereich der Öffnung ist aussenseitig am geöffneten würfelförmigen Körper ein umlaufender Kragen 12 angebracht, der seitlich recht markant vorstehen kann. Wie man der Detaildarstellung gemäss **Figur 8** entnimmt, besitzt dieser Kragen 12 einen nach oben (also in Richtung der Öffnungsseite) hin gerichteten Kamm 11.5 mit einer oberseitigen Kante (entsprechend einer Spitze in der Querschnittdarstellung).

Der Kragen 12 mit dem Kamm 11.5 dient als Hilfsmittel bei der Befestigung des Deckel 13 mittels Ultraschallschweissen. Dazu wird der Deckel 13 wie in Fig. 8 illustriert angelegt. Anschliessend wird von oben (bezogen auf die in Fig. 8 gezeichnete Orientierung) eine Sonotrode eines Ultraschallschweissgeräts gegen den Deckel gepresst und Ultraschallschwingungen werden in diesen eingekoppelt. Der Kragen 12 dient dabei erstens dem Anlegen einer Gegenkraft: Der mit dem Extraktionsgut gefüllte Körper 11 mit wird vor dem Beaufschlagen mit Ultraschallschwingungen auf einer Auflage 15 platziert, so, dass er in eine entsprechend dem Querschnitt des Körpers ausgeformte quadratische Öffnung hineinragt und mit dem Kragen 12 am Rand dieser Öffnung aufliegt. Dadurch ist der Körper beim Ultraschallschweissen fixiert, und die notwendige Gegenkraft kann unabhängig von der Stabilität des Körpers 11 angelegt werden. Der Kamm 11.5 dient als Energierichtungsgeber beim Ultraschallschweissvorgang. Im Bereich des Kamms wird primär Ultraschallenergie in Wärme umgewandelt, so dass das Deckel- 13 und Körpermaterial 11 in deren Umgebung zu schmelzen beginnen und so miteinander verschweisst werden. Anstelle eines Kamms 11.5 oder zusätzlich dazu kann der Kragen auch andere als Energierichtungsgeber wirkende Strukturen aufweisen, bspw. eine Mehrzahl von Spitzen etc.

Anschliessend an den Ultraschallschweissvorgang kann der Kragen durch Stanzen entfernt werden. Dadurch entsteht der Würfel wie in Fig. 3 dargestellt, allenfalls mit einem nur ganz wenig (bspw. um nicht mehr als 0.1 mm) hervorstehenden übrigbleibendem Kragen 1.4 wie in Fig. 2 dargestellt.

Zu diesem Zweck ist günstig, wenn - wie in der Figur 8 dargestellt - der Energierichtungsgeber (hier: Kamm 11.5) nicht wie vom Stand der Technik her bekannt möglichst weit aussen am Kragen, sondern innenseitig, in der Nähe der inneren Wand des Körpers 11 liegt, denn beim Abstanzvorgang sollte vorzugsweise das Abstanzwerkzeug ausserhalb des Ortes ansetzen, an dem vor dem Verschweissen der Energierichtungsgeber war. Beispielsweise beträgt der Abstand d zwischen der durch den Kamm 11.5 gebildeten Kante und der inneren Wand nicht mehr als 0.7 mm, besonders bevorzugt noch weniger, bspw. maximal 0.6 mm, 0.5 mm oder 0.4 mm und beispielsweise zwischen 0.25 mm und 0.4 mm.

In **Figuren 9 und 10** sind Varianten des Kapselkörpers 11 (mit etwas übertrieben dargestellter leichter Konizität) und des Deckels dargestellt, wie sie für ein Herstellungsverfahren nach der zweiten Möglichkeit (mit dem Ultraschall-Trennschweissverfahren) verwendbar sind. Ein Kragen 12 des Kapselkörpers und ein Kragen 13.2 des Deckels werden in einem Amboss aufeinander gelegt und dann mit dem Ultraschall-Trennschweissverfahren abgetrennt, wobei die würfelförmige Kapsel mit einer ganz leicht hervorstehenden Schweissbraue resultiert. Im Unterschied zur vorstehend beschriebenen Ausführungsform weist der Kapselkörper eine im Vergleich zur Breite der Seitenwände leicht geringere Höhe auf, und der Deckel ist nach aussen gewölbt (in der Figur sehr gut sichtbar ist die Wölbung der Deckelinnenpartie 13.1) zur Ergänzung der fehlenden Würfelhöhe. Dadurch ist die Schweissbraue leicht von der oberen Endfläche abgesetzt, d.h. nach unten versetzt.

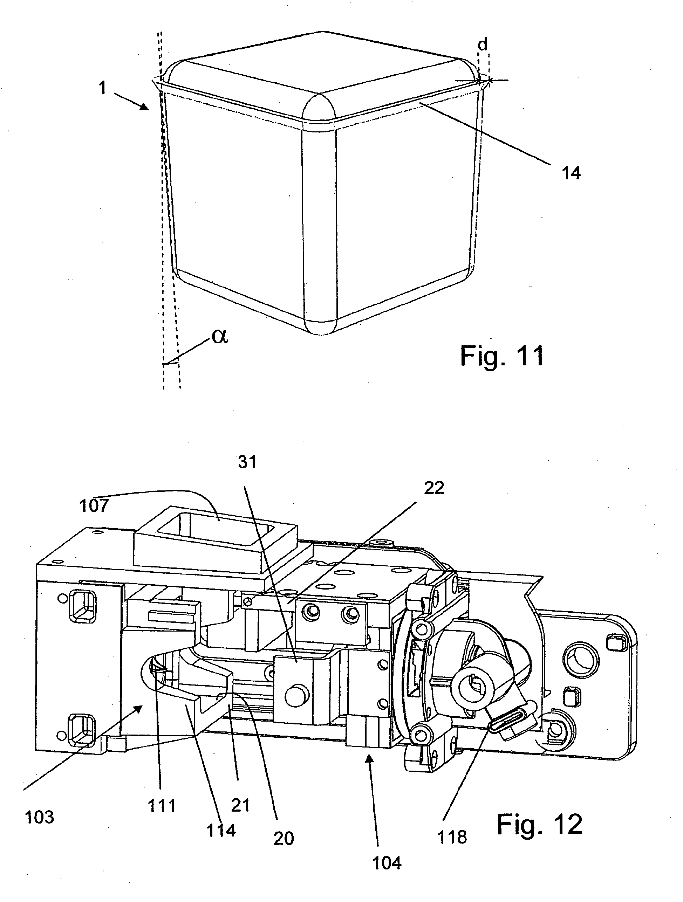

**Figur 11** zeigt ein Beispiel einer mit dem vorstehend erwähnten Ultraschall-Trennschweissverfahren hergestellten Kapsel 1. Deutlich sichtbar sind der ganz leicht von 0° verschiedene Winkel α von ca. 1° (s. auch Fig. 4) und die umlaufende Schweissbraue 14, die allseits um maximal ca. d=0.35 mm seitlich vorsteht, bei einer Würfelgrösse von 27.5x27.5x27.5 mm, also maximal um ca. 3%. Die Schweissbraue ist wie bereits erwähnt leicht gegenüber der oberseitigen Endfläche nach unten versetzt.

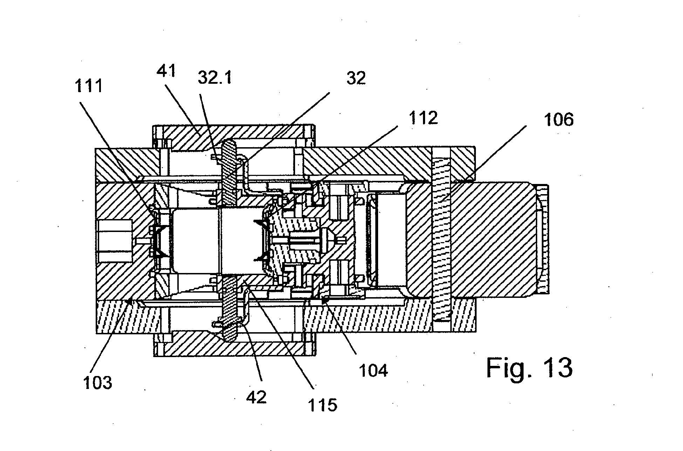

**Figuren 12** **und13** zeigen das Brühmodul mit der Kapsel 1. Das Brühmodul weist in an sich bekannter Art zwischen einem Gerüst mit zwei vertikalen Führungswänden geführt eine Ausleitvorrichtung 103 und einen Injektor 104 auf, die durch einen um einen Drehzapfen 106 schwenkbaren Bedienhebel relativ zueinander verschiebbar sind. In der gezeichneten Ausführungsform ist der Injektor durch eine Schwenkbewegung des Bedienhebels in Richtung der Ausleitvorrichtung 103 verschiebbar, während letztere relativ zum Gerüst unbeweglich ist.

In Figur 12 gut sichtbar ist die Einwurföffnung 107 zum Einwerfen der kubischen Portionenkapsel. Die Einwurföffnung ist im Gerüst ausgebildet, befindet sich im Bereich der Ausleitvorrichtung 103 und bleibt wie diese bei einer Bewegung des Bedienhebels stationär. Die Einwurföffnung kann sich gegen unten verengend leicht konisch sein um so beim Einwerfen eine zentrierende Wirkung auf die Kapsel zu haben, ohne dass die Gefahr eines Verkantens der Kapsel zu gross wäre.

Im Betriebszustand dient das Brühmodul als horizontales Brühmodul einer Kaffeemaschine, welche nebst dem Brühmodul einen Wassertank, eine Wasserheizungsvorrichtung (bspw. Durchlauferhitzer) und eine Pumpe zum Zuführen von Brühwasser zum Injektor 104 aufweist. Die entsprechenden Zuführkanäle 118 des Injektors können wie an sich bekannt ausgebildet sein; sie sind nicht Gegenstand der Erfindung und werden hier nicht eingehender beschrieben. Der Injektor weist ausserdem mindestens eine Anstechspitze 112 mit zugeordneter Zuführöffnung auf, so dass die Kapsel angestochen und durch die Zuführöffnung mit der Extraktionsflüssigkeit versorgt werden kann. Die Kaffeemaschine weist weiter bspw. einen unterhalb der Brühkammer angeordneten Kapselbehälter auf, in welchen die Kapsel nach dem Brühvorgang durch Anheben des Bedienhebels selbsttätig ausgeworfen wird.

Auch die Ausleitvorrichtung 103 ist mit mindestens einer Anstechspitze 111 und einer zugeordneten Ausleitöffnung versehen. Weiter ist je nach Konfiguration auch eine Auslaufleitung vorhanden, mit welcher aus dem Austritt der Ausleitvorrichtung austretender Kaffee (oder dgl.) so geführt wird, dass er in eine am vorgesehenen Ort abgestellte Tasse rinnt.

Wie besonders gut in Figur 12 sichtbar ist, bildet die Ausleitvorrichtung 103 eine Kapselaufnahme mit einer die Auflagefläche 20 definierende Auflage 21 für die durch die Einwurföffnung eingeworfene Kapsel.

Die bei offener Brühkammer durch die Einwurföffnung eingeworfene annähernd würfelförmige Kapsel wird durch die ersten Seitenwände geführt auf der Auflage 21 aufliegen.

Der Injektor weist ausserdem beiderseits je einen über ein Führungsblech 31 angebrachten Anpressbolzen 32 auf, der entgegen einer durch die Federkraft einer in der Figur nicht dargestellten, zwischen einem Kragen 32.1 des Anpressbolzens und der Seitenwand 115 angeordneten Feder gegen innen verschiebbar ist, so, dass er in einer Ruhelage die Seitenwände 115 gegen innen nicht überragt und in einer ausgelenkten Lage über die Seitenwände hinaus nach Innen und in den Brühraum hinein ragt. Der Kragen 32.1 bildet gleichzeitig auch zusammen mit dem Führungsblech 31 einen Anschlag für die radiale Bewegung des Anpressbolzens 32 nach aussen.

Die Funktionsweise der Anpressbolzen 32 ist in **Figur 13** verdeutlicht. Im Seitenteil des Brühmoduls ist beidseitig je eine Kurvenbahn 42 integriert. Eine solche kann entweder in der entsprechenden Seitenwand selbst oder wie dargestellt in einem an der Seitenwand befestigten Kurvenbahnelement 41 ausgebildet sein. Der Anpressbolzen 32 wird von der Federkraft gegen aussen gegen die Kurvenbahn 42 gedrückt. Beim Verschieben des Injektors 104 von der offenen in die geschlossene Stellung wird er aufgrund des Verlaufs der Kurvenbahn entgegen der Federkraft nach innen ausgelenkt. Dadurch wird die eingeführte Kapsel beidseitig zusammengepresst; die Auslenkung der Anpressbolzen gegen innen kann bspw. zwischen 2 und 8 mm betragen, bevorzugt zwischen 3.5 und 7 mm. Dadurch wird das Kaffeepulver im Innern der Kapsel verdichtet, insbesondere in einem zentralen Bereich. Als Folge davon wird auch verhindert, dass mittig durchfliessende Brühflüssigkeit einen geringeren Widerstand erfährt als entlang der Kapselperipherie fliessende Brühflüssigkeit.

Beim Übergang in den geschlossenen Zustand der Brühkammer wird ausserdem die Kapsel leicht zur Seite der Ausleitvorrichtung hin verschoben und dabei beidseitig - durch die Anstechspitzen 111 der Ausleitvorrichtung und die Anstechspitzen 112 des Injektors - angestochen.

Die Anpressbolzen 32 haben nebst dem Komprimieren des Extraktionsguts noch eine weitere Funktion. Sie bewirken, dass nach dem Brühvorgang beim Öffnen der Brühkammer die Kapsel aus der Kapselaufnahme so in Richtung der Injektorseite verschoben wird, dass sie nach unten und in einen (nicht gezeichneten) Kapselbehälter fallen kann. Dies geschieht automatisch, indem beim Verschieben des Injektors zunächst die Anpressbolzen 32 noch ins Brühkammerinnere eingreifen und die Kapsel fixieren; diese Fixierung löst sich erst ungefähr in der in Figur 12 gezeichneten Position, in welcher der Kapselschwerpunkt schon jenseits der Auflagefläche liegt. Diesem Effekt kommt je nach Kapselfüllgrad zusätzlich entgegen, dass das Extraktionsgut nach dem Brühvorgang oft aufgequollen ist und daher dazu neigen wird, die Kapselwände leicht gegen aussen auszubauchen.

Ebenfalls in Figur 13 sichtbar ist, dass die Anstechspitzen 112 auf der Injektorseite einen anderen Abstand voneinander haben als die Anstechspitzen 111 auf der Ausleitvorrichtungsseite. Im dargestellten Beispiel sind die Anstechspitzen auf der Injektorseite markant weiter aussen angeordnet (hier in einem gegenseitigen Abstand von 19 mm) als die Anstechspitzen auf der Ausleitvorrichtungsseite (hier in einem gegenseitigen Abstand von 14 mm). Generell ist bevorzugt, dass die Abstände der Spitzen sich signifikant unterscheiden, bspw. um mindestens 15%.

Die Brühkammer ist so ausgebildet, dass während des Brühvorgangs kein Brühwasser an der Kapsel vorbei in die Ausleitvorrichtung gelangt, und auch dass kein Extraktionsprodukt anderswohin als in die Ausleitvorrichtung fliesst.

## Patentansprüche

1. Verfahren zur Herstellung einer Portionenkapsel mit einer Wandung aus Kunststoff mit der Form eines Würfels oder Quaders für eine Kaffeemaschine mit den Schritten:
- Herstellen eines fünfseitigen, an einer sechsten Seite offenen Polyeder-Grundkörpers (11) mit einem entlang des umlaufenden Rands angeordneten Kragen (12);
- Füllen des Grundkörpers (11) mit einem Extraktionsgut oder Extrakt;
- Befestigen eines Deckels (13) am Grundkörper entlang eines umlaufenden Rands der offenen sechsten Seite mittels Ultraschallschweissen, so, dass der entstehende Innenraum vollständig umschlossen ist.

2. Verfahren nach Anspruch 1, **dadurch gekennzeichnet, dass** der Grundkörper im Tiefziehverfahren hergestellt wird.

3. Verfahren nach Anspruch 1 oder 2, **dadurch gekennzeichnet, dass** beim Arbeitsgang des Ultraschallschweissens durch die Wirkung des Ultraschalls gleichzeitig der Kragen (12) abgetrennt wird.

4. Verfahren nach Anspruch 3, **dadurch gekennzeichnet, dass** für das Ultraschallschweissen und für das Abtrennen des Kragens der Grundkörper auf einem Schneidamboss platziert wird.

5. Verfahren nach Anspruch 1 oder 2, **dadurch gekennzeichnet, dass** anschliessend an das Ultraschallschweissen der umlaufende Kragen (12) mindestens teilweise abgetrennt wird.

6. Verfahren nach einem der vorangehenden Ansprüche, **dadurch gekennzeichnet, dass** der Deckel dieselbe Materialzusammensetzung aufweist wie der Grundkörper.

7. Verfahren nach einem der vorangehenden Ansprüche, **dadurch gekennzeichnet dass** der Deckel dieselbe Dicke aufweist wie der Grundkörper.

8. Verfahren nach einem der vorangehenden Ansprüche, **dadurch gekennzeichnet, dass** der Grundkörper so hergestellt wird, dass seine Seitenflächen gegenüber einer Senkrechten auf die Grundfläche geneigt sind, wobei der Neigungswinkel höchstens 3° beträgt.

9. Verfahren nach einem der vorangehenden Ansprüche, **dadurch gekennzeichnet, dass** der Deckel nach aussen gewölbt ist.

10. Verfahren nach einem der vorangehenden Ansprüche, **dadurch gekennzeichnet dass** Grundkörper und Deckel aus Kunststoff gefertigt sind.

11. Verfahren nach Anspruch 10, **dadurch gekennzeichnet, dass** Grundkörper und Deckel aus Polypropylen gefertigt sind.

12. Verfahren nach einem der vorstehenden Ansprüche, **dadurch gekennzeichnet, dass** die Kapsel einen umlaufenden Rand aufweist, der maximal 1.5 mm vorsteht.

## Claims

1. A method for manufacturing a portion capsule with a wall of plastic with the shape of a cube or cuboid, for a coffee machine, with the steps:
- manufacturing a five-sided polyhedron base body (11) open at a sixth side, with a collar (12) which is arranged along the peripheral edge;
- filling the base body (11) with an extraction material or extract;
- fastening a cover (13) on the base body along a peripheral edge of the open sixth side by way of ultrasound welding, so that the arising in inner space is completely enclosed.

2. A method according to claim 1, **characterised in that** the base body is manufactured with the deep-drawing method.

3. A method according to claim 1 or 2, **characterised in that** the collar (12) is simultaneously separated away with the working procedure of the ultrasound welding, by way of the action of the ultrasound.

4. A method according to claim 3, **characterised in that** the base body is placed on a cutting anvil for the ultrasound welding and for the separation of the collar.

5. A method according to claim 1 or 2, **characterised in that** the peripheral collar (12) is at least partly separated away subsequently to the ultrasound welding.

6. A method according to one of the preceding claims, **characterised in that** the cover has the same material composition as the base body.

7. A method according to one of the preceding claims, **characterised in that** the cover has the same thickness as the base body

8. A method according to one of the preceding claims, **characterised in that** the base body is manufactured such that its side surfaces are inclined with respect to a perpendicular to the base surface, wherein the inclination angle at the most is 3°.

9. A method according to one of the preceding claims, **characterised in that** the cover is bulging outwards.

10. A method according to one of the preceding claims, **characterised in that** the base body and the cover are manufactured of plastic.

11. A method according to claim 10, **characterised in that** the base body and the cover are manufactured of polypropylene.

12. A method according to one of the preceding claims, **characterised in that** the capsule has a peripheral edge which projects maximally by 1.5 mm.

## Revendications

1. Procédé de fabrication d'une capsule de portion pour une machine à café, la capsule étant dotée d'une paroi en matière synthétique et présentant la forme d'un cube ou d'un parallélépipède, le procédé comportant les étapes qui consistent à :
fabriquer un corps de base polyédrique (11) à cinq faces, ouvert sur une sixième face, et doté d'un collet (12) disposé le long du bord périphérique,
remplir le corps de base (11) d'un produit à extraire ou d'un extrait et
par soudage à ultrasons, fixer un couvercle (13) sur le corps de base le long du bord périphérique de la sixième face ouverte, de telle sorte que l'espace intérieur ainsi obtenu soit complètement fermé.

2. Procédé selon la revendication 1, **caractérisé en ce que** le corps de base est fabriqué par une opération d'emboutissage profond.

3. Procédé selon les revendications 1 ou 2, **caractérisé en ce que** lors de l'opération de soudage par ultrasons, le collet (12) est découpé simultanément par l'effet des ultrasons.

4. Procédé selon la revendication 3, **caractérisé en ce que** pour le soudage par ultrasons et la séparation du collet, le corps de base est placé sur une enclume de découpe.

5. Procédé selon les revendications 1 ou 2, **caractérisé en ce qu'**après le soudage par ultrasons, le collet périphérique (12) est découpé au moins partiellement.

6. Procédé selon l'une des revendications précédentes, **caractérisé en ce que** le couvercle présente la même composition matérielle que le corps de base.

7. Procédé selon l'une des revendications précédentes, **caractérisé en ce que** le couvercle présente la même épaisseur que le corps de base.

8. Procédé selon l'une des revendications précédentes, **caractérisé en ce que** le corps de base est fabriqué de telle sorte que ses surfaces latérales soient inclinées vis-à-vis de la normale à la surface de base, l'angle d'inclinaison valant au plus 3°.

9. Procédé selon l'une des revendications précédentes, **caractérisé en ce que** le couvercle est bombé vers l'extérieur.

10. Procédé selon l'une des revendications précédentes, **caractérisé en ce que** le corps de base et le couvercle sont réalisés en matière synthétique.

11. Procédé selon la revendication 10, **caractérisé en ce que** le corps de base et le couvercle sont réalisés en polypropylène.

12. Procédé selon l'une des revendications précédentes, **caractérisé en ce que** la capsule présente un bord périphérique qui déborde d'au plus 1,5 mm.
